(19) Europäisches Patentamt / European Patent Office / Office européen des brevets

(11) **EP 1 648 130 B1**

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(51) Int Cl.:
**H04L 27/26** (2006.01)

(21) Anmeldenummer: **05021907.0**

(22) Anmeldetag: **08.10.2005**

(54) **Verfahren zu Unterdrückung spektraler Nebenzipfel in auf OFDM beruhenden Übertragungssystemen**

Method for suppressing the side lobes in OFDM communication systems

Méthode pour l'élimination des lobes secondaires dans les systèmes de communication OFDM

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.10.2004 DE 102004049802**

(43) Veröffentlichungstag der Anmeldung:
**19.04.2006 Patentblatt 2006/16**

(73) Patentinhaber: **Deutsches Zentrum für Luft- und Raumfahrt e.V.**
**51147 Köln (DE)**

(72) Erfinder:
 • **Schnell, Michael, Dr.**
 **82205 Gilching (DE)**
 • **Brandes, Sinja**
 **85375 Neufahrn (DE)**

(74) Vertreter: **von Kirschbaum, Albrecht**
**Patentanwalt**
**Postfach 1520**
**82102 Germering (DE)**

(56) Entgegenhaltungen:
EP-A- 1 422 897   WO-A-00/38386
WO-A-20/04105336   US-A- 6 035 000
US-A1- 2005 047 535

 • **BALDEMAIR, R.: "Suppression of narrow frequency bands in multicarrier transmission systems" EUSIPCO - PROCEEDINGS OF THE X EUROPEAN SIGNAL PROCESSING CONFERENCE, 4. September 2000 (2000-09-04), Seiten 553-556, XP002372892 Tampere, Finland**
 • **YOO H ET AL: "EDGE SIDELOBE SUPPRESSOR SCHEME FOR OFDMA UPLINK SYSTEMS" IEEE COMMUNICATIONS LETTERS, IEEE SERVICE CENTER, PISCATAWAY, NJ, US, Bd. 7, Nr. 11, November 2003 (2003-11), Seiten 534-536, XP001185628 ISSN: 1089-7798**
 • **BRANDES S ET AL: "Reduction of out-of-band radiation in OFDM based overlay systems" NEW FRONTIERS IN DYNAMIC SPECTRUM ACCESS NETWORKS, 2005. DYSPAN 2005. 2005 FIRST IEEE INTERNATIONAL SYMPOSIUM ON BALTIMORE, MD, USA 8-11 NOV. 2005, PISCATAWAY, NJ, USA,IEEE, 8. November 2005 (2005-11-08), Seiten 662-665, XP010855171 ISBN: 1-4244-0013-9**
 • **BRANDES S ET AL: "Sidelobe suppression in OFDM systems by insertion of cancellation carriers" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, 28. September 2005 (2005-09-28), Seiten 152-156, XP010878440 ISBN: 0-7803-9152-7**

**Beschreibung**

Die vorliegende Erfindung betrifft ein Verfahren zur Unterdrückung spektraler Nebenzipfel des Sendesignals in drahtlosen oder drahtgebundenen OFDM-Übertragungssystemen und in Mehrträger-Ubertragungssystemen, die OFDM verwenden oder auf OFDM basieren, wobei im Frequenzbereich des Übertragungssystems bestimmte Unterträger als Auslöschungsuntezträger eingeführt werden, die anstelle komplexer Datensymbole im Allgemeinfall komplexe Gewichtungsfaktoren tragen, die abhängig von dem gerade zu übertragenden OFDM-Datensymbol bestimmt werden.

Das Spektrum eines OFDM-Sendesignals weist bekanntlich starke Nebenzipfel auf. Dies bedeutet, dass bei einer OFDM-Übertragung außerhalb der Übertragungsbandbreite beachtliche Sendeleistungen abgestrahlt werden.

Zur Unterdrückung spektraler Nebenzipfel bei OFDM gibt es gemäß dem Stand der Technik verschiedene Möglichkeiten.

Spektrale Nebenzipfel lassen sich insbesondere durch Filterungsmaßnahmen unterdrücken. Derartige Maßnahmen bedeuten zum einen zusätzlichen Realisierungsaufwand und damit zusätzliche Kosten. Zum anderen wird das Sendesignal durch den Filtervorgang beeinflusst und es können Störungen auftreten. Insbesondere wird durch die Filterung das OFDM-Symbol im Zeitbereich verlängert, wodurch störende Symbolinterferenzen zwischen aufeinander folgenden OFDM-Symbolen entstehen können.

Eine Unterdrückung spektraler Nebenzipfel lässt sich in OFDM-Übertragungssystemen auch dadurch erreichen, dass große Schutzbänder zu den im Frequenzbereich benachbarten Systemen vorgesehen bzw. Unterträger am Frequenzbereichsrand des OFDM-Übertragungssystems freigelassen werden. Das Verfahren, Unterträger am Frequenzbereichsrand freizulassen, d.h. nicht mit Datensymbolen zu belegen, wird beispielsweise in den Standards DAB ("Digital Audio Broadcasting") und DVB-T ("Digital Video Broadcasting - Terrestrial") verwendet. Diese bekannten Maßnahmen sind jedoch ineffizient und verschwenden die wertvolle Ressource Spektrum. Steht nur ein kleiner Frequenzbereich zur Übertragung zur Verfügung, macht es keinen Sinn, ein OFDM-Übertragungssystem in diesen Frequenzbereich zu legen, wenn große Schutzbänder vorzusehen sind oder Unterbänder freigelassen werden müssen.

Eine Unterdrückung spektraler Nebenzipfel in OFDM-Übertragungssystemen kann auch durch Pulsformung erfolgen. Anstelle des rechteckförmigen Impulses für das OFDM-Symbol im Zeitbereich können andere Pulsformen gewählt werden, die ein günstigeres Spektrum besitzen, d.h. ein Spektrum, dessen Nebenzipfel schneller abklingen. Beispiele für derartige Pulse sind Nyquist-Pulse, wie beispielsweise der "Raised Cosine"-Puls. Allerdings haben andere Pulsformen als der Rechteckpuls auch ziemliche Nachteile. Es vergrößert sich nämlich die zeitliche Ausdehnung des OFDM-Symbols, wodurch Symbolinterferenzen entstehen können. Darüber hinaus kann zur OFDM-Modulation und -Demodulation nicht mehr die aufwandsgünstige Realisierung mittels DFT/IDFT ("Discrete Fourier Transformation"/"Inverse Discrete Fourier Transformation") bzw. FFT/IFFT ("Fast Fourier Transformation"/"Inverse Fast Fourier Transformation") verwendet werden.

Der vorstehend beschriebene Stand der Technik zur Unterdrückung von spektralen Nebenzipfeln bei OFDM-Übertragungssystemen beruht auf Lehrbuchwissen und kann beispielsweise in dem Buch von Proakis, J.G.: "Digital Communications", New York: McGraw-Hill Inc., 1995 oder im Buch von van Nee, R.; Prasad, R.: "OFDM for Wireless Multimedia Communications", Boston: Artech House, 2000 nachgeschlagen werden.

Bei manchen OFDM-Übertragungssystemen besteht die Anforderung, kleine Frequenzbereiche zu nutzen. Diese Forderung ist beispielsweise beim Entwurf von auf OFDM basierenden "Overlay"-Übertragungssystemen aufgestellt. Ein "Overlay"-Übertragungssystem ist ein Kommunikationssystem, das im Spektrum eines anderen Übertragungssystems arbeiten und die dort ungenutzten Frequenzbereiche zur Übertragung nutzen darf.

In US-A-6 035 000 werden im Zusammenhang mit einem Mehrträger-Datenübertragungssystem sogenannte "Dummy Tones", also Fülltöne oder Füllbänder, zur Unterdrückung von Nebenaussendungen in eingeschränkten Frequenzbändern, z.B. geschützten Funkamateurbändern, beschrieben. "Dummy Tones" sind spezielle Unterträger, die zumeist an den Rändern des Mehrträgerspektrums liegen und keine Daten tragen, sondern nur Gewichtungsfaktoren. Die Gewichtungsfaktoren der "Dummy Tones" sind auf eine Linearkombination der gewichteten Werte der Datensymbole einzelner Träger beschränkt. Zur Bestimmung der "Dummy Tones" wird nur ein Abtastwert pro spektralem Nebenzipfel in der Mitte zwischen zwei Nulldurchgängen verwendet. Dabei wird angenommen, dass die Nebenzipfel-Maxima exakt in der Mitte zwischen zwei Nulldurchgängen liegen. Damit kann mit diesem bekannten Verfahren keine optimale Lösung erreicht werden. Auch lässt sich dieses bekannte Verfahren nicht mehr anwenden, wenn im Zeitbereich ein Schutzintervall (Guard-Intervall) eingefügt wird, wodurch die Orthogonalität der einzelnen Unterträger im Sender verloren geht.

In dem Artikel von Robert Baldemair: "Suppression of narrow frequency bands in multicarrier transmission systems", EUSIPCO - Proceedings of the X European Signal Processing Conference, 4. September 2000, Seiten 553 bis 556, XP002372892, Tampere, Finnland, ist im Zusammenhang mit der Unterdrückung von schmalen Frequenzbändern in Mehrträger-Übertragungssystemen die Addition eines Kompensationssignals zum eigentlichen Nutzsignal beschrieben. Es wird hier das Ziel angestrebt, die Nebenaussendungen in schmalen Frequenzbändern innerhalb der OFDM-Bandbreite zu reduzieren, um auf diese Weise mehr Unterträger zur Datenübertragung zu erhalten. Die Bestimmung des Kompensationssignals erfolgt im Zeitbereich nach einer Inversen Diskreten Fourier-Transformation (IDFT), wobei zunächst die Impulsantwort des Sendefilters für das Kompensationssignal entworfen wird, mit dessen Spektrum die unerwünschten Nebenaussendungen reduziert werden können. In einem zweiten Schritt wird dann die Anregung des Filters entsprechend der übertragenen Datensymbole bestimmt.

In WO 00/38386 A ist ein Verfahren zur Unterdrückung von schmalen Frequenzbändern in Mehrträger-Obertragungssystemen beschrieben, das demjenigen aus dem vorstehend zitierten Artikel ähnelt. Auch hierbei wird pro zu unterdrückendem spektralen Nebenzipfel ein Kompensationssignal bestimmt. Allerdings wird das Verfahren so weit verallgemeinert, dass das Kompensationssignal sowohl im Zeit- als auch im Frequenzbereich eingefügt werden kann. Wird das Kompensationssignal im Frequenzbereich eingefügt, so werden die Datensymbole auf den Unterträgern im zu unterdrückenden Frequenzbereich nicht mit Nullen moduliert, sondern mit Kompensationssymbolen beladen, wobei für jeden zu unterdrückenden spektralen Nebenzipfel ein eigenes Kompensationssymbol bestimmt wird und bei der Bestimmung des im Zeitbereich erzeugten Kompensationssignals in der Regel bereits übertragene OFDM-Symbole berücksichtigt werden müssen. Für das Kompensationssignal werden Unterträger beladen, die innerhalb des zu unterdrückenden Frequenzbereichs liegen. Ziel der Optimierung ist bei diesem bekannten Verfahren die Minimierung des "Integrals des gewichteten, gesendeten Leistungsdichte-Spektrums über den gesamten Frequenzbereich" bzw. des "Integrals über den gesamten Frequenzbereich des gewichteten, quadrierten Betrags der Fourier-Transformierten des gesendeten Datensignals über eine vorbestimmte Anzahl von Datenblöcken".

Der vorliegenden Erfindung liegt nunmehr die Aufgabe zu Grunde, spektrale Nebenzipfel in allen OFDM-Übertragungssystemen und Mehrträger-Übertragungssystemen, die auf OFDM beruhen oder OFDM verwenden, zu unterdrücken oder zumindest erheblich zu reduzieren, ohne dass ein zusätzlicher Filteraufwand erforderlich wird und das OFDM-Sendesignal durch einen zu Störungen, insbesondere Symbolinterferenzen, führenden Filtervorgang beeinflusst wird. Bei der durch die Erfindung zu schaffende Nebenzipfelunterdrückung soll darüber hinaus auch die wertvolle Ressource Spektrum ohne Verschwendung möglichst vollständig ausgenutzt werden, was insbesondere dann von hoher Bedeutung ist, wenn nur ein kleiner Frequenzbereich zur Übertragung verfügbar ist.

Gemäß der vorliegenden Erfindung, die sich auf ein Verfahren zur Unterdrückung spektraler Nebenzipfel in OFDM-Übertragungssystemen bzw. Mehrträger-Übertragungssystemen, die auf OFDM basieren, der eingangs genannten Art bezieht, wird diese Aufgabe in vorteilhafter Weise dadurch gelöst, dass die Gewichtungsfaktoren gemäß einem Optimierungskriterium aus den zu übertragenden Datensymbolen für jedes zu übertragende OFDM-Datensymbol individuell so bestimmt werden, dass unter Lieferung des für jedes OFDM-Datensymbol optimalen Ergebnisses die spektralen Nebenzipfel des OFDM-Sendesignals minimiert werden, dass die so bestimmten Gewichtungsfaktoren bei allen drahtlosen und drahtgebundenen OFDM-Übertragungssystemen anwendbar sind, dass bei Anordnung zweier Auslöschungsunterträger $c_L(x)$ und $c_R(x)$ an der Stelle der Unterträger am linken bzw. rechten Rand des OFDM-Spektrums die Gewichtungsfaktoren $g_L$ bzw. $g_R$ gemäß einem Optimierungskriterium bestimmt werden, das in einer Minimierung des quadratischen Fehlers zwischen dem OFDM-Sendesignal $s(x)$ und den gewichteten Auslöschungsunterträgern $g_L \cdot c_L(x)$ und $g_R \cdot c_R(x)$ jeweils im Bereich des ersten spektralen Nebenzipfels außerhalb der Übertragungsbandbreite besteht, und dass bei der Optimierung der Gewichtungsfaktoren $g_L$ und $g_R$ der Auslöschungsunterträger $c_L$ und $c_R$ eine Nebenbedingung berücksichtigt wird, die in einer Begrenzung der Sendeleistung $P_c$ der gewichteten Auslöschungsunterträger $g_L \cdot c_L(x)$ und $g_R \cdot c_R(x)$ besteht, so dass diese Sendeleistung $P_c = |g_L|^2 + |g_R|^2$ einen bestimmten Anteil $\varepsilon, 0 \le \varepsilon \le 1$ der Gesamtsendeleistung $P_{OFDM}$ mit $P_{OFDM} = \Sigma |d_n|^2 + |g_L|^2 + |g_R|^2$ nicht übersteigen darf, so dass $P_c \le \varepsilon \cdot P_{OFDM}$ gilt, wobei $\Sigma |d_n|^2$ die Leistungssumme der auf den Unterträgern zu übertragenden binären Datensymbole ist.

Die Nebenzipfelunterdrückung in OFDM-Systemen und Mehrträger-Übertragungssystemen, die auf OFDM basieren, wird gemäß der vorliegenden Erfindung somit durch Einführung von Auslöschungsunterträgern erzielt. Die Auslöschungsunterträger tragen keine Information. Anstelle eines komplexen Datensymbols erhalten die Auslöschungsunterträger spezielle komplexe Gewichtungsfaktoren. Diese werden so bestimmt, dass gemäß einem Optimierungskriterium die Nebenzipfel des OFDM-Sendesignals minimiert werden. Die Auslöschungsunterträger dienen also dazu, die Nebenzipfel auszulöschen bzw. zu reduzieren, die durch die anderen Unterträger des OFDM-Übertragungssystems erzeugt werden.

Das Verfahren nach der vorliegenden Erfindung weist gegenüber dem Stand der Technik eine Reihe von Vorteilen auf. Es werden weder Symbolinterferenzen noch andere Störungen erzeugt. Es werden lediglich sehr kleine Schutzbänder benötigt. DFT/IDFT bzw. FFT/IFFT können weiterhin zur OFDM-Modulation und -Demodulation verwendet werden.

Der einzige Nachteil, den das Verfahren nach der vorliegenden Erfindung aufweist, besteht darin, dass die Auslöschungsunterträger nicht zur Datenübertragung zur Verfügung stehen, wodurch sich die Übertragungskapazität geringfügig vermindert.

Vorteilhafte Ausgestaltungen, Weiterbildungen und Verwendungen des erfindungsgemäßen Verfahrens zur Unterdrückung spektraler Nebenzipfel des Sendesignals in drahtlosen oder drahtgebundenen OFDM-Übertragungssystemen und in Mehrträger-Übertragungssystemen, die OFDM verwenden oder auf OFDM basieren, sind in den unmittelbar oder mittelbar auf den Patentanspruch 1 rückbezogenen Unteransprüchen angegeben.

Zum besseren Verständnis wird nachfolgend die vorliegende Erfindung anhand eines relativ einfachen Ausführungsbeispiels unter Bezugnahme auf die beigefügten Zeichnungen erläutert. Es zeigen:

Fig.1 ein Spektrumsdiagramm eines gewöhnlichen OFDM-Sendesignals mit Unterträgerspektren sowie dem Spektrum des Summensignals für ein OFDM-Übertragungssystem mit acht Unterträgern,

Fig.2 ein Spektrumsdiagramm eines gemäß der vorliegenden Erfindung unter Verwendung von Auslöschungsunterträgern arbeitenden OFDM-Sendesignals mit Spektren des Summensignals für die OFDM-Übertragung, des Summensignals der beiden Auslöschungsunterträger und des endgültigen OFDM-Sendesignals, das aus dem Summensignal für die OFDM-Übertragung und den beiden Auslöschungsunterträgern resultiert, und

Fig.3 eine Vergleichsdarstellung zum Vergleich von OFDM-Sendesignalspektrum mit/ohne Auslöschungsunterträger, wobei Leistungsdichtespektren des OFDM-Sendesignals ohne Auslöschungsunterträger und des OFDM-Sendesignals mit Auslöschungsunterträgern im logarithmischen Maßstab dargestellt sind.

Betrachtet wird ein OFDM-Übertragungssystem mit $N$ Unterträgern und BPSK-Modulation ("Binary Phase Shift Keying"-Modulation). BPSK bedeutet, dass binäre Übertragungssymbole $d_n$, $n=1,...,N,$ übertragen werden, d.h. es gilt $d_n \in \{+1,-1\}$. Die Dauer eines BPSK-Symbols wird mit $T_s$ bezeichnet. Da ein OFDM-Symbol gleichzeitig $N$ BPSK-Symbole überträgt, beträgt die OFDM-Symboldauer $T=N \cdot T_s$. Die Anzahl der Auslöschungsunterträger wird mit $M$ bezeichnet. Die Unterträger im OFDM-System werden von links nach rechts durchnummeriert, also nach aufsteigender Mittenfrequenz, wobei der Unterträger am linken Rand mit 1 und dessen Mittenfrequenz mit $f_1$ und der Unterträger am rechten Rand mit $N$ und dessen Mittenfrequenz mit $f_N$ benannt wird. Die Unterträger werden im Folgenden mit $s_n(x)$, $n=1,...,N,$ bezeichnet und lassen sich gemäß

$$s_n(x) = d_n \cdot \frac{\sin(x - x_n)}{x - x_n}, \; n = 1, ..., N \qquad (1)$$

darstellen, wobei $x=fT/\pi$ die normierte Frequenz bedeutet und $x_n=f_n T/\pi$ die normierte Mittenfrequenz des Unterträgers $n$ darstellt. Zur weiteren Vereinfachung wird im betrachteten Beispiel die Auslöschungsunterträgeranzahl auf $M=2$ festgelegt, und es werden die Unterträger 1 und $N$ als Auslöschungsunterträger ausgewählt. Ferner wird für die betrachtete BPSK-Übertragung beispielhaft die Symbolfolge $\{d_2,...,d_{N-1}\}=\{+1,...,+1\}$ gewählt.

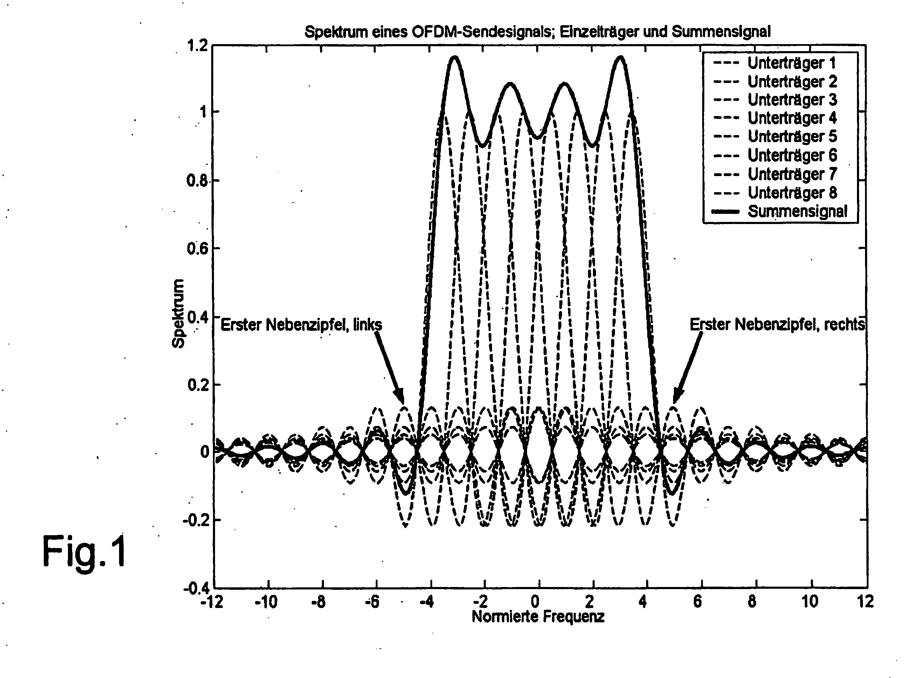

In Fig.1 ist für ein OFDM-Sendesignal das Spektrum der Einzelträger (gestichelt) sowie das Spektrum des Summensignals (dicke durchgehende Linie) für eine OFDM-Übertragung mit $N=8$ Unterträgern ohne Verwendung von Auslöschungsunterträgern dargestellt. In diesem Beispiel liegt der erste Nebenzipfel im positiven Bereich der normierten Frequenz $x=fT/\pi$ zwischen $x=4,5$ und $x=5,5$. Entsprechendes gilt für den negativen Bereich der normierten Frequenz $x=fT/\pi$. Hier liegt der erste Nebenzipfel zwischen $x=-5,5$ und $x=-4,5$. Alle Nebenzipfel haben die gleiche normierte Breite $\Delta x=1$ im Frequenzbereich. Die Amplitude der Nebenzipfel nimmt mit wachsendem $|x|$ ab.

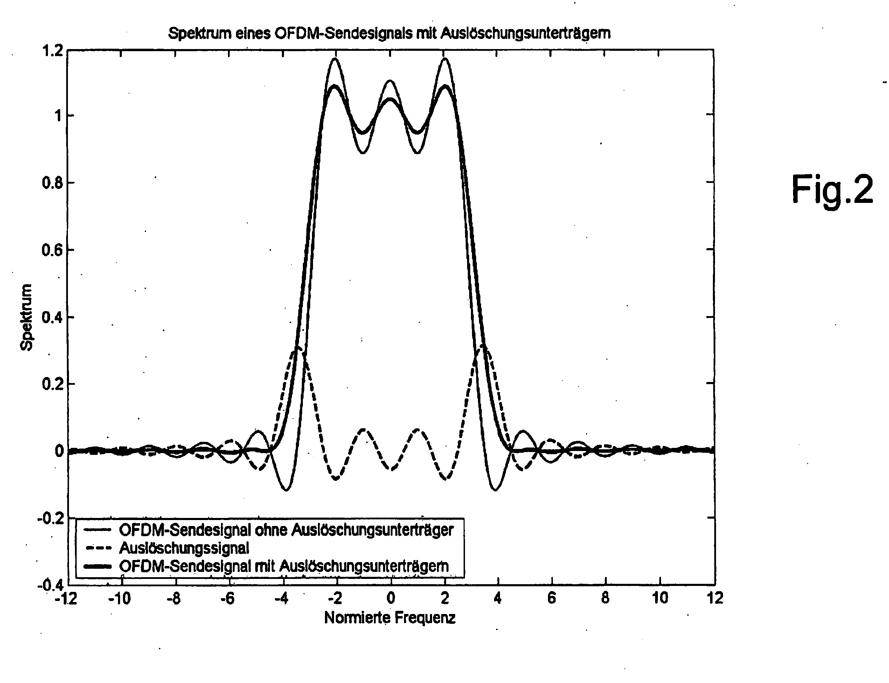

Im folgenden wird gezeigt, wie gemäß der vorliegenden Erfindung die Nebenzipfel durch Einführen von Auslöschungsunterträgern reduziert werden können. Im vorliegenden Beispiel werden $M=2$ Auslöschungsunterträger verwendet, und zwar die Unterträger 1 und 8 am jeweiligen Rand des OFDM-Spektrums. In Fig.2 ist das Spektrum des Summensignals für die OFDM-Übertragung dargestellt (schmale durchgehende Linie), das daraus entsteht, dass die Unterträger 1 und 8 weggelassen werden. Ferner sind die beiden Auslöschungsunterträger (gestrichelt) sowie das Spektrum des endgültigen OFDM-Sendesignals (breite durchgehende Linie) eingetragen, das aus den Unterträgern 2 bis 7 und den beiden Auslöschungsunterträgern resultiert. Deutlich ist die Reduktion der Nebenzipfel im Spektrum des endgültigen OFDM-Sendesignals zu erkennen. Zu beachten ist, dass die Auslöschungsunterträger keine Störung der Datenübertragung auf den anderen Unterträgern verursachen. Die Auslöschungsunterträger sind gewöhnliche OFDM-Unterträger und damit orthogonal zu allen anderen Unterträgern. Die Auslöschungsunterträger weisen lediglich spezielle Gewichtungsfaktoren auf, die in der Regel ungleich den BPSK-Symbolwerten $\{+1,-1\}$ sind.

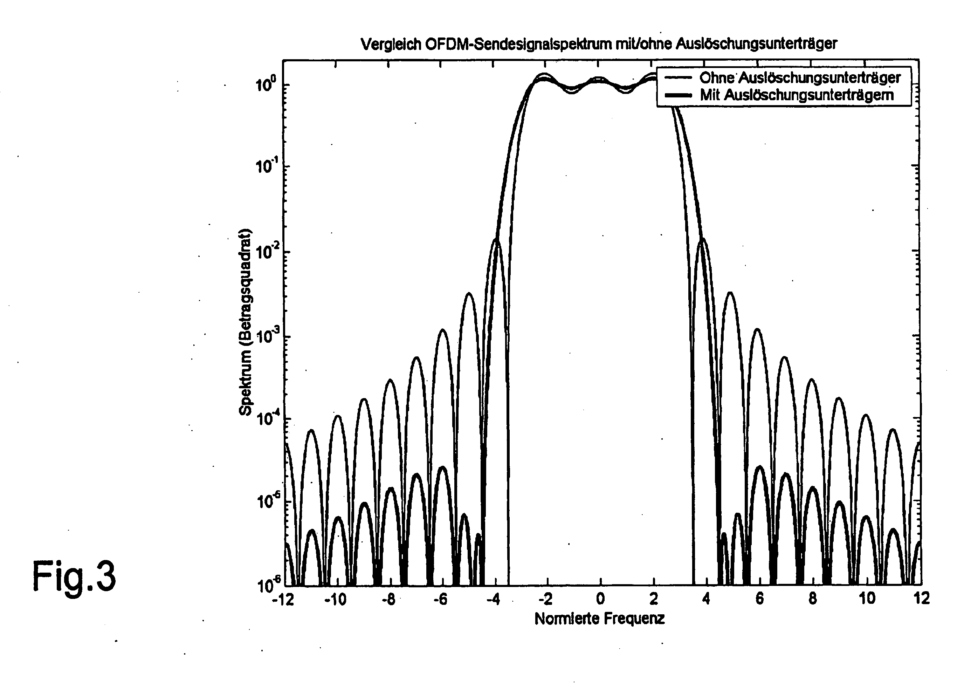

Um die mit dem Verfahren gemäß der vorliegenden Erfindung erzielte Nebenzipfelunterdrückung besser zu verdeutlichen, sind in Fig.3 die Leistungsdichtespektren von OFDM-Sendesignal ohne Auslöschungsunterträger (schmale graue Linie) und OFDM-Sendesignal mit Auslöschungsunterträger (breite graue Linie) im logarithmischen Maßstab gegenübergestellt. Im betrachteten Beispiel wird eine Nebenzipfelunterdrückung von über 20 dB erzielt.

Nachdem gezeigt worden ist, dass durch Einführung von Auslöschungsunterträgern eine erhebliche Nebenzipfelunterdrückung erzielt werden kann, wird im Folgenden dargelegt, wie die Auslöschungsunterträger geeignet bestimmt werden können, um eine möglichst gute Nebenzipfelunterdrückung zu realisieren.

Da die Unterträger 1 und 8 bei der Bildung des Summensignals $s(x)$ weggelassen werden, um bei den Mittenfrequenzen $f_1$ und $f_8$ Platz für die Auslöschungsunterträger zu schaffen, ergibt sich das OFDM-Sendesignal $s(x)$ ohne Auslöschungsunterträger im betrachteten Beispiel zu

$$s(x) = \sum_{n=2}^{7} s_n(x) = \sum_{n=2}^{7} d_n \cdot \frac{\sin(x - x_n)}{x - x_n} . \qquad (2)$$

Der linke Auslöschungsunterträger bei der Mittenfrequenz $f_1$ wird mit $c_L(x)$ und der rechte. Auslöschungsunterträger bei der Mittenfrequenz $f_N$ mit $c_R(x)$ bezeichnet. Um eine möglichst gute Nebenzipfelunterdrückung durch die Auslöschungsunterträger $c_L(x)$ und $c_R(x)$ zu erzielen, werden diese mit einem Gewichtungsfaktor $g_L$ bzw. $g_R$ skaliert. Im vorliegenden Beispiel sind die Gewichtungsfaktoren rein reell, da eine BPSK-Modulation zugrunde gelegt worden ist. Die Bestimmung der Gewichtungsfaktoren erfolgt gemäß einem Optimierungskriterium. Im vorliegenden Beispiel wird dafür die Minimierung des quadratischen Fehlers zwischen dem OFDM-Sendesignal $s(x)$ und den gewichteten Auslöschungsunterträgern $g_L \cdot c_L(x)$ und $g_R \cdot c_R(x)$ jeweils im Bereich des ersten Nebenzipfels außerhalb der Übertragungsbandbreite verwendet

$$\int_{-5,5}^{-4,5} |s(x) - g_L \cdot c_L(x)|^2 \, dx \rightarrow \min, \qquad (3)$$

$$\int_{4,5}^{5,5} |s(x) - g_R \cdot c_R(x)|^2 \, dx \rightarrow \min. \qquad (4)$$

Die Bestimmung der Gewichtungsfaktoren $g_L$ und $g_R$ gemäß den Gleichungen (3) und (4) kann mit oder ohne Berücksichtigung von Nebenbedingungen ausgeführt werden. Als Nebenbedingung kann beispielsweise die Forderung aufgestellt werden, dass die Leistung $P_c$ der gewichteten Auslöschungsunterträger $g_L \cdot c_L(x)$ und $g_R \cdot c_R(x)$ gemäß

$$P_c = |g_L|^2 + |g_R|^2 \qquad (5)$$

einen bestimmten Anteil $\varepsilon$, $0 \le \varepsilon \le 1$, der Gesamtsendeleistung $P_{OFDM}$ mit

$$P_{OFDM} = \sum_{n=2}^{7} |d_n|^2 + |g_L|^2 + |g_R|^2 \qquad (6)$$

nicht übersteigen darf

$$P_c \le \varepsilon \cdot P_{OFDM} . \qquad (7)$$

Die Optimierung der Gewichtungsfaktoren $g_L$ und $g_R$, wie in den Gleichungen (3) und (4) formuliert mit oder ohne Berücksichtigung der Nebenbedingung aus Gleichung (7), ist ein bekanntes mathematisches Problem, dessen Lösung in der einschlägigen Literatur nachgeschlagen werden kann, beispielsweise in Courant, R.; Hilbert D.: "Methods of Mathematical Physics", New York: John Wiley & Sons, 1989 und in Golub, G.H.; van Loan, C.F.: "Matrix Computations", Third Edition, The John Hopkins University Press, 1996.
Das Verfahren nach der vorliegenden Erfindung ist nicht auf das vorstehend beschriebene Ausführungsbeispiel beschränkt, sondern lässt sich auf folgende Fälle verallgemeinern:

- Das Verfahren gemäß der vorliegenden Erfindung ist nicht nur auf OFDM-Übertragungssysteme anwendbar, sondern auf alle Übertragungsverfahren, die auf OFDM beruhen, wie beispielsweise "Orthogonal Frequency-Division Multiple-Access" (OFDMA) und "Multi-Carrier Code-Division Multiple-Access" (MC-CDMA).

- Das Verfahren gemäß der vorliegenden Erfindung ist auf OFDM-Systeme oder Mehrträger-Übertragungssysteme, die auf OFDM beruhen, mit beliebiger Unterträgeranzahl $N$ anwendbar.

- Das Verfahren gemäß der vorliegenden Erfindung ist nicht auf BPSK beschränkt, sondern kann auf Modulationsverfahren, wie beispielsweise QPSK oder QAM, erweitert werden, die in OFDM-Übertragungssystemen oder Mehrträger-Übertragungssystemen, die auf OFDM beruhen, verwendet werden.

- Das Verfahren gemäß der vorliegenden Erfindung beschränkt sich nicht auf die Verwendung von reellen Gewichtungsfaktoren für die Auslöschungsunterträger. Vielmehr sind die Gewichtungsfaktoren im allgemeinen komplex zu wählen. Dies gilt insbesondere, wenn andere Modulationsverfahren als BPSK in den betrachteten OFDM-Übertragungssystemen oder Mehrträger-Übertragungssystemen, die auf OFDM beruhen, verwendet werden.

- Das Verfahren gemäß der vorliegenden Erfindung ist nicht auf eine Anzahl $M{=}2$ Auslöschungsunterträger beschränkt. Vielmehr kann eine beliebige Anzahl $M{<}N$ Auslöschungsunterträger verwendet werden.

- Das Verfahren gemäß der vorliegenden Erfindung beschränkt sich nicht auf Auslöschungsunterträger an den beiden Rändern des Sendesignalspektrums. Vielmehr können die $M{<}N$ Auslöschungsunterträger beliebige Unterträger des OFDM-Übertragungssystems oder des Mehrträger-Übertragungssystems, das auf OFDM beruht, sein.

- Das Verfahren gemäß der vorliegenden Erfindung beschränkt sich nicht auf die Verwendung des Optimierungskriteriums "Minimaler Quadratischer Fehler zwischen OFDM-Sendesignal $s(x)$ und den gewichteten Auslöschungsunterträgern $g_L \cdot c_L(x)$ und $g_R \cdot c_R(x)$ jeweils im Bereich des ersten Nebenzipfels außerhalb der Übertragungsbandbreite". Es können sowohl andere Optimierungskriterien als das Kriterium "Minimaler Quadratischer Fehler" als auch andere Bereiche als der erste Nebenzipfelbereich eingesetzt werden, in denen das Optimierungskriterium angewendet wird. Ferner können neben den komplexen Gewichtungsfaktoren der Auslöschungsunterträger auch noch deren Unterträgerpositionen (Mittenfrequenzen) im OFDM-Übertragungssystem oder dem auf OFDM beruhenden Mehrträger-Übertragungssystem als Optimierungsparameter betrachtet werden, wodurch der Freiheitsgrad für die Optimierungsaufgabe gesteigert und damit das Ergebnis der Optimierung potentiell verbessert wird.

- Die Optimierung der Gewichtungsfaktoren kann sowohl ohne als auch mit Nebenbedingungen erfolgen. Wird eine Optimierung der Gewichtungsfaktoren mit Nebenbedingungen durchgeführt, so beschränkt sich das Verfahren gemäß der vorliegenden Erfindung nicht auf die Nebenbedingung, welche die Sendeleistung der Auslöschungsunterträger begrenzt. Vielmehr können beliebige andere Nebenbedingungen bei der Optimierung der Gewichtungsfaktoren berücksichtigt werden.

- Das Verfahren gemäß der Erfindung beschränkt sich nicht auf die Bestimmung der Auslöschungsunterträger und deren Gewichtungsfaktoren im Frequenzbereich. Vielmehr können die Auslöschungsunterträger auch im Zeitbereich eingefügt werden.

- Das Verfahren gemäß der vorliegenden Erfindung ist auf OFDM-Systeme oder Mehrträgerübertragungssysteme. die auf OFDM beruhen, mit beliebiger Unterträgeranzahl N anwendbar, bei denen ein bestimmter Teil der Unterträger frei gelassen wird, wie beispielsweise im "Reverse-link" von OFDMA.

- Das Verfahren gemäß der vorliegenden Erfindung lässt sich auf einfache Weise mit anderen Verfahren zur Nebenzipfelunterdrückung kombinieren, beispielsweise mit den drei einleitend beschriebenen Verfahren entsprechend dem Stand der Technik. Dies ist möglich, da das Verfahren gemäß der vorliegenden Erfindung keine prinzipiellen Änderungen am OFDM-Übertragungssystem oder dem auf OFDM basierenden Mehrträger-Übertragungssystem erfordert. Das resultierende Übertragungssystem mit Auslöschungsunterträgern bleibt ein OFDM-Übertragungssystem oder ein auf OFDM basierendes Mehrträger-Übertragungssystem.

Das Verfahren nach der vorliegenden Erfindung kann bei allen auf OFDM beruhenden, drahtgebundenen Mehrträger-Übertragungssystemen eingesetzt werden, um dort eine Unterdrückung spektraler Nebenzipfel zu erzielen. Im Zusammenhang mit drahtgebundener Kommunikation wird OFDM häufig auch als "Discrete Multi-Tone (DMT) Modulation" bezeichnet. OFDM bzw. DMT wird bei der drahtgebunden Kommunikation häufig als Anschlussverbindung zu den Haushalten ("last mile") verwendet, um diese digital an die Außenwelt anzubinden. Die dazu existierenden verschiedenen Übertragungstechniken werden unter dem Begriff "Digital Subscriber Line" (DSL) zusammengefasst. DSL-Übertragungstechniken sind beispielsweise HDSL ("High-Speed Digital Subscriber Line"), ADSL ("Asymmetric Digital Subscriber Line") und SDSL ("Symmetric Digital Subscriber Line"). Die DSL-Übertragungstechniken sind Beispiele für den Anwendungsbereich des Erfindungsgedankens im Bereich der drahtgebundenen Kommunikation. Ferner lässt sich das erfindungsgemäße Verfahren für OFDM-Systeme im Bereich "Power Line Communications" anwenden.

Das Verfahren gemäß der vorliegenden Erfindung kann auch bei allen auf OFDM beruhenden, drahtlosen Übertragungssystemen eingesetzt werden, um dort eine Unterdrückung spektraler Nebenzipfel zu erreichen. Die Anwendung hier umfasst sowohl bereits standardisierte, auf OFDM beruhende Systeme, wie beispielsweise DAB, DVB-T, WLAN entsprechend den Standards HIPERLAN/2 oder IEEE 802.11a/b/g oder MAN (Metropolitan Area Network) nach IEEE 802.16/802.16a, als auch neue Systeme, wie beispielsweise die auf OFDM basierenden MC-CDMA-Entwicklungen im Rahmen der "Vierten Generation Mobilfunk" (4G).

Das Verfahren nach der vorliegenden Erfindung ist auch in Verbindung mit sogenannten OFDM-basierten "Overlay"-Systemen von großem Interesse. Ein "Overlay"-System ist ein Übertragungssystem (Füllsystem), das im Frequenzband eines anderen Übertragungssystems (Hauptsystem) arbeitet und die dort aktuell brachliegenden Frequenzlücken nutzt. Besonders geeignet für "Overlay"-Systeme sind Systeme, die auf OFDM basieren, da diese durch Abschalten einzelner Unterträgergruppen Bereiche im Spektrum aussparen können, in denen das Hauptsystem gerade überträgt. Allerdings würden die starken Nebenzipfel eines Standard-OFDM-Verfahrens entweder das Hauptsystem stören oder es erforderlich machen, dass große Schutzbänder oder steilflankige Sendefilter verwendet werden müssen. Erst die Nebenzipfelunterdrückung gemäß der vorliegenden Erfindung ermöglicht somit eine effiziente Realisierung von "Overlay"-Systemen.

Das Verfahren nach der vorliegenden Erfindung ermöglicht also den Verzicht auf eine zusätzliche Filterung oder Pulsformung des Sendesignals und erlaubt die Verwendung kleinerer Schutzbänder. Die Eigenschaften des OFDM-Sendesignals werden dabei nicht nachteilig beeinflusst. Als einziger, allerdings nicht besonders relevanter Nachteil ergibt sich eine geringfügig kleinere Übertragungskapazität, da die Auslöschungsunterträger nicht zur Datenübertragung herangezogen werden können.

Ferner ermöglicht das Verfahren nach der vorliegenden Erfindung die Realisierung von effizienten, auf OFDM basierenden "Overlay"-Systemen, die seit kurzem in der Forschung entwickelt werden, um eine bessere Ausnutzung der wertvollen Ressource Spektrum zu realisieren. Das potentielle Anwendungsgebiet für "Overlay"-Systeme reicht von der terrestrischen Funkübertragung über die aeronautische Kommunikation bis hin zur Satellitenkommunikation. Aktuell wird z.B. in einem EU-Projekt im 6. Rahmenprogramm an der Entwicklung eines "Overlay"-Systems für die zukünftige ATC ("Air Traffic Control") Kommunikation im VHF-Band gearbeitet.

## Patentansprüche

**1.** Verfahren zur Unterdrückung spektraler Nebenzipfel des Sendesignals in drahtlosen oder drahtgebundenen OFDM-Übertragungssystemen und in Mehrträger-Übertragungssystemen, die OFDM verwenden oder auf OFDM basieren, wobei im Frequenzbereich des Übertragungssystems bestimmte Unterträger als Auslöschungsunterträger eingeführt werden, die anstelle komplexer Datensymbole im Allgemeinfall komplexe Gewichtungsfaktoren tragen, die abhängig von dem gerade zu übertragenden OFDM-Datensymbol bestimmt werden, wobei die Gewichtungsfaktoren gemäß einem Optimierungskriterium aus den zu übertragenden Datensymbolen für jedes zu übertragende OFDM-Datensymbol individuell so bestimmt werden, dass unter Lieferung des für jedes OFDM-Datensymbol optimalen Ergebnisses die spektralen Nebenzipfel des OFDM-Sendesignals minimiert werden, und wobei die so bestimmten Gewichtungsfaktoren bei allen drahtlosen und drahtgebundenen OFDM-Übertragungssystemen anwendbar sind, und wobei bei Anordnung zweier Auslöschungsunterträger $c_L(x)$ und $c_R(x)$ an der Stelle der Unterträger am linken bzw. rechten Rand des OFDM-Spektrums die Gewichtungsfaktoren $g_L$ bzw. $g_R$ gemäß einem Oprimierungskriterium bestimmt werden, das in einer Minimierung des quadratischen Fehlers zwischen dem OFDM-Sendesignal $s(x)$ und den gewichteten Auslöschungsunterträgern $g_L \cdot c_L(x)$ und $g_R \cdot c_R(x)$ jeweils im Bereich des ersten spektralen Nebenzipfels außerhalb der Übertragungsbandbreite besteht, und **dadurch gekennzeichnet dass** bei der Optimierung der Gewichtungsfaktoren $g_L$ und $g_R$ der Auslöschungsuntertreger $c_L$ und $c_R$ eine Nebenbedingung berücksichtigt wird, die in einer Begrenzung der Sendeleistung $P_c$ der gewichteten Auslöschungsunterträger $g_L \cdot c_L(x)$ und $g_R \cdot c_R(x)$ besteht, so dass diese Sendeleistung $P_c = |g_L|^2 + |g_R|^2$ einen bestimmten Anteil $\varepsilon, 0 \leq \varepsilon \leq 1$ der Gesamtsendeleistung $P_{OFDM}$ mit $P_{OFDM} = \Sigma|d_n|^2 + |g_L|^2 + |g_R|^2$ nicht übersteigen darf, so dass $Pc \leq \varepsilon\ P_{OFDM}$ gilt, wobei $\Sigma|d_n|^2$ die Leistungssumme der auf den Unterträgern zu übertragenden binären Datensymbole ist.

**2.** Verfahren nach Anspruch 1, **dadurch gekennzeichnet, dass** die Auslöschungsunterträger OFDM-Unterträger sind, die orthogonal zu allen anderen Unterträgern sind.

**3.** Verfahren nach Anspruch 1, **dadurch gekennzeichnet, dass** die Gewichtungsfaktoren reell gewählt werden.

**4.** Verfahren nach einem der vorhergehenden Ansprüche, **gekennzeichnet durch** eine Kombination mit einem oder mehreren anderen Verfahren zur Unterdrückung spektraler Nebenzipfel im betneffenden OFDM-Übertragungssystem bzw. im betreffenden Mehrträger-Übertragungssystem, das OFDM verwendet oder auf OFDM basiert.

**5.** Verfahren nach einem der vorhergehenden Ansprüche zur Verwendung im Rahmen einer auf OFDM beruhenden; drahtgebundenen digitalen Anschlussanbindung von Haushalten "last mile" an die Außenwelt entsprechend den unter dem Begriff "Digital Subscriber Line" DSL, zusammengefassten verschiedenen Übertragungstechniken.

**6.** Verfahren nach einem der Ansprüche 1 bis 4 zur Verwendung im Rahmen eines drahtgebundenen digitalen OFDM-Übertragungssystems im Bereich "Power Line Communications".

**7.** Verfahren nach einem der Ansprüche 1 bis 4 zur Verwendung im Rahmen eines bereits standardisierten, auf OFDM beruhenden drahtlosen Übertragungssystems.

**8.** Verfahren nach einem der Ansprüche 1 bis 4 zur Verwendung in Verbindung mit einem sogenannten OFDM-basierten "Overlay"-Übertragungssystem, d.h. einem Übertragungssystem, das als Füllsystem im Frequenzband eines anderen, als Hauptsystem betriebenen Übertragungssystems arbeitet und die dort aktuell brachliegenden Frequenzlücken nutzt.

**9.** Verfahren nach Anspruch 8 zur Verwendung in einem terrestrischen, aeronautischen oder Satelliten-Funkkommunikationssystem.

**Claims**

**1.** Method for suppressing the spectral side lobes of a transmission signal in wireless or wired OFDM communication systems and in multi-carrier communication systems using OFDM or based on OFDM, wherein certain sub-carriers are introduced as extinction sub-carriers in the frequency range of the transmission system, which, instead of complex data symbols, generally carry complex weighting factors determined as a function of the OFDM data symbol to be transmitted presently, wherein, according to an optimizing criterion, said weighting factors are determined individually for each OFDM data symbol to be transmitted from the data symbols to be transmitted, such that the side lobes of the OFDM transmission signal are minimized while the optimum result for each OFDM data symbol is obtained, and wherein

the weighting factors thus determined are applicable to all wireless and wired OFDM communication systems, and wherein

when positioning two extinction sub-carriers $c_L(x)$ and $c_R(x)$ at the location of the sub-carriers at the left and right edge of the OFDM spectrum, respectively, the weighting factors $g_L$ and $g_R$ are determined according to an optimizing criterion that consists in minimizing the square error between the OFDM transmission signal $s(x)$ and the weighted extinction sub-carriers $g_L \cdot c_L(x)$ and $g_R \cdot c_R(x)$ in the range of the first side lobe outside the transmission bandwidth, respectively, and

**characterized in that**

when optimizing the weighting factors $g_L$ and $g_R$ of the extinction sub-carriers $c_L$ and $c_R$, a side condition is considered that consists in a limitation of the transmission power $P_c$ of the weighted extinction sub-carriers $g_L \cdot c_L(x)$ and $g_R \cdot c_R(x)$, so that this transmission power $P_c = |g_L|^2 + |g_R|^2$ must not exceed a certain portion $\varepsilon$, $0 \leq \varepsilon \leq 1$ of the overall transmission power $P_{OFDM}$, where $P_{OFDM} = \Sigma|d_n|^2 + |g_L|^2 + |g_R|^2$, so that $P_c \leq \varepsilon \cdot P_{OFDM}$ is true, where $\Sigma|d_n|^2$ is the sum of power of the binary data symbol to be transmitted on the sub-carriers.

**2.** The method of claim 1, **characterized in that** the extinction sub-carriers are OFDM sub-carriers that are orthogonal to all other sub-carriers.

**3.** The method of claim 1, **characterized in that** the weighting factors are selected so as to be real.

**4.** The method of one of the preceding claims, **characterized by** a combination with one or a plurality of other methods for suppressing side lobes in the relevant OFDM communication system or in the relevant multi-carrier communication system using OFDM or based on OFDM.

**5.** The method of one of the preceding claims, for use in the context of an OFDM-based, wired digital terminal connection of households ("last mile") to the outside world according to the different transmission techniques summarized under the term "Digital Subscriber Line" (DSL).

6. The method of one of claims 1 to 4, for use in the context of a wired digital OFDM communication system in the domain of "Power Line Communications".

7. The method of one of claims 1 to 4, for use in the context of an already standardized OFDM-based wireless communication system.

8. The method of one of claims 1 to 4, for use in connection with a socalled OFDM-based overlay communication system, i.e. a communication system operating as a filler system in the frequency band of another communication operated as the main system, and using the currently unused frequency gaps therein.

9. The method of claim 8, for use in a terrestrial, aeronautic or satellite radio communication system.

## Revendications

1. Procédé pour éliminer des lobes secondaires spectraux du signal d'émission dans des systèmes de communication OFDM filaires ou sans fil et dans des systèmes de communication à porteuses multiples qui emploient la modulation OFDM ou sont basés sur la modulation OFDM, dans lequel des sous-porteuses définies dans le domaine de fréquences du système de communication sont introduites en tant que sous-porteuses de suppression qui, au lieu de porter des symboles de données complexes, portent en général des facteurs de pondération complexes qui sont déterminés en fonction du symbole de données OFDM justement à transmettre, dans lequel les facteurs de pondération sont déterminés individuellement selon un critère d'optimisation parmi des symboles de données à transmettre pour chaque symbole de données OFDM à transmettre de sorte que, avec la fourniture du résultat optimal pour chaque symbole de données OFDM, les lobes secondaires spectraux du signal d'émission OFDM soient minimisés, et dans lequel
les facteurs de pondération ainsi déterminés sont utilisables dans tous les systèmes de communication OFDM sans fil et filaires, et dans lequel
avec un agencement de deux sous-porteuses de suppression $c_L(x)$ et $c_R(x)$ à la place des sous-porteuses sur les bords gauche respectivement droit du spectre OFDM, les facteurs de pondération $g_L$ respectivement $g_R$ sont déterminés selon un critère d'optimisation qui consiste en une minimisation de l'erreur quadratique entre le signal d'émission OFDM $s(x)$ et les sous-porteuses de suppression pondérées $g_L c_L(x)$ et $g_R c_R(x)$ à chaque fois dans le domaine du premier lobe secondaire spectral en dehors de la largeur de bande de transmission, et **caractérisé en ce que,** lors de l'optimisation des facteurs de pondération gL et gR des sous-porteuses de suppression $c_L$ et $c_R$, il est tenu compte d'une condition secondaire qui consiste en une limitation de la puissance $P_c$ des sous-porteuses de suppression pondérées $g_L c_L(x)$ et $g_R c_R(x)$ de sorte que cette puissance d'émission $P_c = |g_L|^2 + |g_R|^2$ ne doive pas dépasser une certaine portion $\varepsilon$, avec $0 \leq \varepsilon \leq 1$, de la puissance totale d'émission $P_{OFDM}$ avec $P_{OFDM} = \Sigma |d_n|^2 + |g_L|^2 + |g_R|^2$ de sorte que soit valable la relation $P_c \leq \varepsilon * P_{ODFM}$, $\Sigma |d_n|^2$ étant la somme des puissances des symboles de données binaires à transmettre sur les sous-porteuses.

2. Procédé selon la revendication 1, **caractérisé en ce que** les sous-porteuses de suppression sont des sous-porteuses OFDM qui sont orthogonales à toutes les autres sous-porteuses.

3. Procédé selon la revendication 1, **caractérisé en ce que** les facteurs de pondération choisis sont des facteurs réels.

4. Procédé selon l'une quelconque des revendications précédentes, **caractérisé par** une combinaison avec un ou plusieurs autres procédés pour éliminer des lobes secondaires spectraux dans le système de communication OFDM concerné respectivement dans le système de communication à porteuses multiples concerné qui emploie la modulation OFDM ou qui est basé sur la modulation OFDM.

5. Procédé selon l'une quelconque des revendications précédentes, destiné à être utilisé dans le cadre d'une liaison de raccordement, numérique filaire reposant sur la modulation OFDM, du « dernier kilomètre » de foyers au monde extérieur correspondant aux diverses techniques regroupées sous le terme « *Digital Subscriber Line* », DSL (« ligne d'abonné numérique »).

6. Procédé selon une des revendications 1 à 4, destiné à être utilisé dans le cadre de systèmes de communication OFDM numériques filaires dans le domaine des « courants porteurs en ligne ».

**7.** Procédé selon une des revendications 1 à 4, destiné à être utilisé dans le cadre d'un système de communication sans fil déjà standardisé, reposant sur la modulation OFDM.

**8.** Procédé selon une des revendications 1 à 4, destiné à être utilisé en conjonction avec un dit système de communication « à recouvrement » basé sur la modulation OFDM, c'est-à-dire avec un système de communication qui fonctionne en tant que système de remplissage dans la bande de fréquences d'un autre système de communication exploité en tant que système principal et qui y utilise des vides de fréquences actuellement inemployées.

**9.** Procédé selon la revendication 8, destiné à être utilisé dans un système de radiocommunication terrestre, aéronautique ou satellitaire.

Fig.1

Spektrum eines OFDM-Sendesignals; Einzelträger und Summensignal

Untertäger 1
Untertäger 2
Untertäger 3
Untertäger 4
Untertäger 5
Untertäger 6
Untertäger 7
Untertäger 8
Summensignal

Erster Nebenzipfel, links

Erster Nebenzipfel, rechts

Spektrum

Normierte Frequenz

EP 1 648 130 B1

Spektrum eines OFDM-Sendesignals mit Auslöschungsunterträgern

Fig.2

OFDM-Sendesignal ohne Auslöschungsunterträger
--- Auslöschungssignal
OFDM-Sendesignal mit Auslöschungsunterträgern

Normierte Frequenz

Spektrum

EP 1 648 130 B1

Vergleich OFDM-Sendesignalspektrum mit/ohne Auslöschungsunterträger

Fig.3

EP 1 648 130 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6035000 A

- WO 0038386 A

**In der Beschreibung aufgeführte Nicht-Patentliteratur**

- **PROAKIS, J.G.** Digital Communications. Mc-Graw-Hill Inc, 1995
- **ROBERT BALDEMAIR.** Suppression of narrow frequency bands in multicarrier transmission systems. *EUSIPCO - Proceedings of the X European Signal Processing Conference,* 04. September 2000, 553-556

- **COURANT, R. ; HILBERT D.** Methods of Mathematical Physics. John Wiley & Sons, 1989
- **GOLUB, G.H. ; VAN LOAN, C.F.** Matrix Computations. The John Hopkins University Press, 1996